# EUROPÄISCHE PATENTSCHRIFT

(11) **EP 0 873 902 B1**
(45) Veröffentlichungstag und Bekanntmachung des Hinweises auf die Patenterteilung: **14.06.2000**
(21) Anmeldenummer: 98105361.4
(22) Anmeldetag: 25.03.1998
(51) Int. Cl.: B60K 41/08

(54) **Verfahren zum Schalten eines synchronisiergliederfreien Zahnräderwechselgetriebes**
Method of gear shifting for an unsynchronised gearbox
Méthode de changement des vitesses pour une boîte de transmission non-synchronisée

(30) Priorität: 23.04.1997 DE 19717042
(43) Veröffentlichungstag der Anmeldung: 28.10.1998
(73) Patentinhaber: DaimlerChrysler AG, 70567 Stuttgart (DE)
(72) Erfinder: Back, Ottmar, 82362 Weilheim (DE)

(56) Entgegenhaltungen:
- EP-A- 0 490 627
- DE-A- 3 507 565
- DE-A- 3 513 279
- US-A- 5 508 916

## Beschreibung

Die Erfindung betrifft ein Verfahren zum Schalten eines synchronisiergliederfreien Zahnräderwechselgetriebes nach dem Oberbegriff von Patentanspruch 1.
Aus der DE 35 07 565 C2 ist eine nach dem Verfahren der eingangs genannten Art arbeitende Einrichtung zur Herstellung des Synchronlaufes eines schaltkupplungs- und synchronisiergliederfreien Stufenwechselgetriebes für ein mit einer Brennkraftmaschine als Antriebsmotor ausgerüstetes Fahrzeug,insbesondere Kraftfahrzeug,bekannt,die mit wenigstens einer Vorrichtung zur Beeinflussung der Drehmomentabgabe der Brennkraftmaschine,einer Getriebesteuereinheit und Mitteln zur Bestimmung des Synchronpunktes des Stufenwechselgetriebes versehen ist, wobei während des Gangschaltens die Drehzahl der Brennkraftmaschine nach dem Ausrücken des alten Ganges auf die dem neuen Gang entsprechende Drehzahl verändert wird und bei Erreichen des Synchronpunktes der neue Getriebegang eingerückt wird.
Um zu vermeiden, daß das Einrücken des vorgewählten Ganges erst erfolgt, wenn der Synchronpunkt der zu kuppelnden Getriebeglieder bereits deutlich überschritten ist, weil die gesamte Anordnung und insbesondere die mechanischen Einrichtungen zur Gangschaltung im allgemeinen trägheitsbehaftet sind, um also ein komfortvolles ruckfreies Einschalten eines neuen Getriebeganges ohne Zuhilfenahme besonderer mechanischer Synchronisierglieder zu ermöglichen, ist bei der bekannten Einrichtung die Arbeitsweise so vorgesehen, daß bei Erreichen des Synchronpunktes die Drehmoment - Beeinflussungsvorrichtung schlagartig zur Einstellung eines solchen geringen Drehmomentes der Brennkraftmaschine beaufschlagbar ist,daß die Drehzahl der Brennnkraftmaschine konstant bleibt oder sich nur geringfügig verändert.

Aus der DE-A- 35 13 279 ist eine Einrichtung zur automatischen Schaltung eines einem Antriebsmotor nachgeschalteten mehrgängigen Zahnrad-Wechselgetriebes für Fahrzeuge, insbesondere Kraftfahrzeuge, in Abhängigkeit von den Betriebszustand des Fahrzeugs charakterisierenden Kennngrößen mit den einzelnen Getriebegängen zugeordneten, jeweils aus einem Los- und einem Festrad bestehenden Zahnradpaaren und mit einer von einem Steuergerät gesteuerten Servostelleinrichtung zum Einrücken von den Losrädern der Zahnradpaare zugeordneten Kupplungsgliedern, die eine formschlüssige Verbindung des dem jeweils einzurückenden Gang zugeordneten Losrades mit einer Antriebs- oder Abtriebswelle des Getriebes herstellen, bekannt. In dieser Druckschrift wird es als nachteilig angesehen, daß herkömmliche Getriebeautomaten, bei denen der Schaltaufwand wesentlich reduziert ist, trotz erhöhten technischen Aufwandes zu wenig Getriebestufen mit einem dadurch relativ schlechten Wirkungsgrad bieten. Es wird daher angestrebt, eine Einrichtung zur automatischen Schaltung von Zahnrad-Wechselgetrieben für Fahrzeuge zu schaffen, die einen Einsatz herkömmlicher, sogenannter mechanischer Schaltgetriebe ermöglicht und infolgedessen einen einfacheren Aufbau und einen günstigeren Wirkungsgrad bietet. Zu diesem Zweck sind bei der bekannten Einrichtung die Kupplungsglieder zur Selbsthaltung in der eingerückten Stellung bei Anliegen eines oberhalb eines Mindestwertes liegenden Zugmomentes des Antriebsmotores und zum selbsttätigen Ausrücken bei Unterschreitung des Mindestzugmomentes ausgebildet. Für die Selbsthaltefunktion sind hinterschnittene Zahnflanken - dagegen für das selbsttätige Ausrücken federnde Mittel vorgesehen.

Aus der US-A- 55 08 916 ist ein Verfahren zum Schalten eines synchronisiergliederfreien Zahnräderwechselgetriebes bekannt, bei welchem nach dem Ausrücken der Zahnradkupplung des alten Ganges die Motordrehzahl zunächst auf einen Wert nahe unterhalb der Synchrondrehzal bei Rückschaltungen oder auf einen Wert nahe oberhalb der Synchrondrehzahl bei Hochschaltungen und anschließend zum Einrücken der Zahnradkupplung des neuen Ganges in ein um die Synchrondrehzahl nach oben und unten schwingendes Verhalten gebracht, wobei angenommen wird, daß beim Durchlaufen der Synchrondrehzahl ein momentenfreier Zustand an den in gegenseitigen Eingriff gelangenden Kupplungszähnen der Zahnradkupplung ausgenutzt werden kann.

Die der vorliegenden Erfindung zugrunde liegende Aufgabe ist im wesentlichen darin zu sehen, die bei einem Verfahren der eingangs genannten Art erforderlichen Schaltkräfte zum Einrücken der formschlüssigen Zahnradkupplungen so gering wie möglich zu halten.
Die erläuterte Aufgabe ist gemäß der Erfindung mit den kennzeichnenden Merkmalen von Patentanspruch 1 in vorteilhafter Weise gelöst.
Bei dem Verfahren nach der Erfindung ist erreicht, daß bei jedem Gangwechsel immer nur ein- und dieselbe eine der beiden Eingriffsflanken eines Kupplungszahnes einer Kupplungshälfte der beteiligten Zahnradkupplung mit einer in Umfangsrichtung benachbarten Eingriffsflanke der anderen Kuppungshälfte in Kontakt treten kann, und zwar sowohl für den Fall, daß die antriebsseitige Kupplungshälfte immer die höhere Drehzahl gegenüber der abtriebsseitigen Kupplungshälfte aufweist als auch für den anderen Fall, daß die antriebsseitige Kupplungshälfte immer die niedrigere Drehzahl aufweist, so daß eine symmetrische Anschrägung oder Anschrägungen an beiden Eingriffsflanken eines Kupplungszahnes nicht mehr erfoderlich ist bzw. sind. Eine solche Anschrägung hat stets eine Axialkraftkomponente zur Folge, welche den Schaltkomfort einschränkt.
Demzufolge hat sich bei dem Verfahren nach der Erfindung die Verwendung von Zahnradkupplungen nach Patentanspruch 2, bei denen die eine Eingriffsflanke eines Kupplungszahnes vollständig in einer die Kupplungsachse enthaltenden Ebene liegt, als vorteilhaft erwiesen.
Bei dem Verfahren nach der Erfindung kann die Synchrondrehzahl so eingeregelt werden, daß eine Restdifferenzdrehzahl verbleibt und zwar derart, daß die Drehzahl der motorseitigen Getriebeelemente (Gangrad) höher ist als die Drehzahl der abtriebsseitigen Getriebeelemente (Schiebemuffe).
Vorteilhafterweise liegen diese Differenzdrehzahlen gemäß Patentanspruch 4 zwischen 10 min⁻¹ und 40 min⁻¹.

Bei dem Verfahren nach der Erfindung ist erreicht, daß die Schaltung der jeweiligen Zahnradkupplung immer so erfolgt, daß dieselben Eingriffsflanken der Kupplungszähne aneinander anschlagen, egal, ob es sich um eine Hochschaltung oder um eine Herunterschaltung handelt.
Somit können die Eingriffsflanken des jeweiligen Kupplungszahnes derart gestaltet werden, daß die eine Eingriffsflanke ohne Anschrägung und die andere Eingriffsflanke gemäß Patentanspruch 3 mit einer Anschrägung versehen ist. Dies ermöglicht, daß die Kupplungszähne der beiden Kupplungshälften immer mit den geraden Eingriffsflanken aneinander anschlagen und hierdurch lediglich Umfangskräfte erzeugt werden, die die verbliebene Differenzdrehzahl abbauen, und keine Axialkräfte entstehen, die der Schaltkraft entgegenwirken würden. Die Anschrägung der zweiten Eingiffsflanke ermöglicht ein axiales Einrücken der Kupplungszähne während des Überstreichens des Differenzwinkels zwischen zwei gegenüberstehenden Kupplungszähnen.
Die Patentansprüche 5 bis 7 haben jeweils einen Prüfschritt zum Einleiten oder Beenden eines Verfahrensschrittes unter vorbestimmten Bedingungen zum Gegenstand.

Die Erfindung ist nachstehend anhand einer in der Zeichnung schematisch dargestellten Ausführungsform näher beschrieben. In der Zeichnung bedeuten
- Fig. 1: ein Blockschaltbild eines Antriebsaggregates eines Kraftfahrzeuges mit einem nach dem Verfahren gemäß der Erfindung geschalteten synchronisiergliederfreien Zahnräderwechselgetriebe,
- Fig. 2: die Darstellung von fünf Schaltphasen (a) bis (e) eines Schaltvorganges bei dem Zahnräderwechselgetriebe von Figur 1 anhand der jeweiligen gegenseitigen Stellung von Kupplungszähnen der beiden Kupplungshälften der Zahnradkupplung des neuen Ganges, und
- Fig. 3: einen Signalflußplan für den Ablauf des Verfahrens nach der Erfindung zum Schalten des Zahnräderwechselgetriebes von Figur 1.

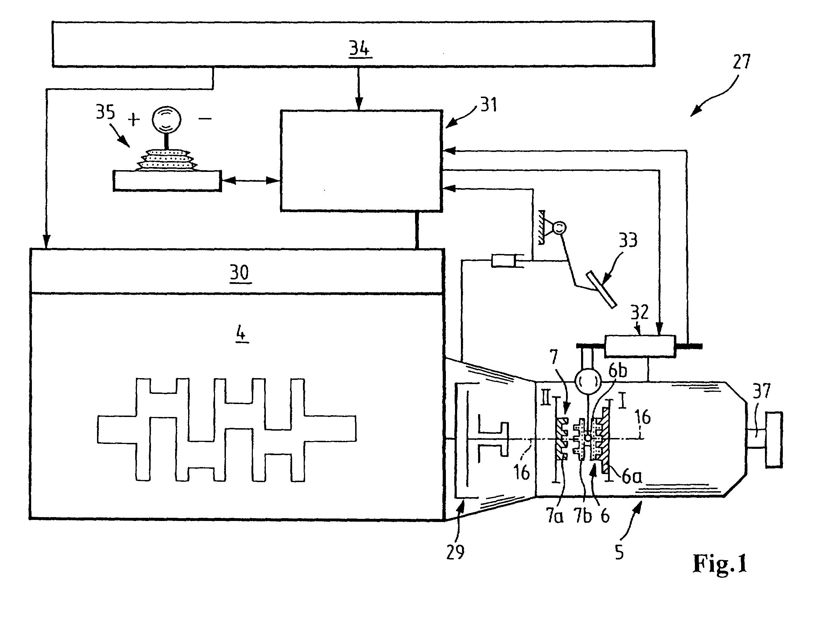

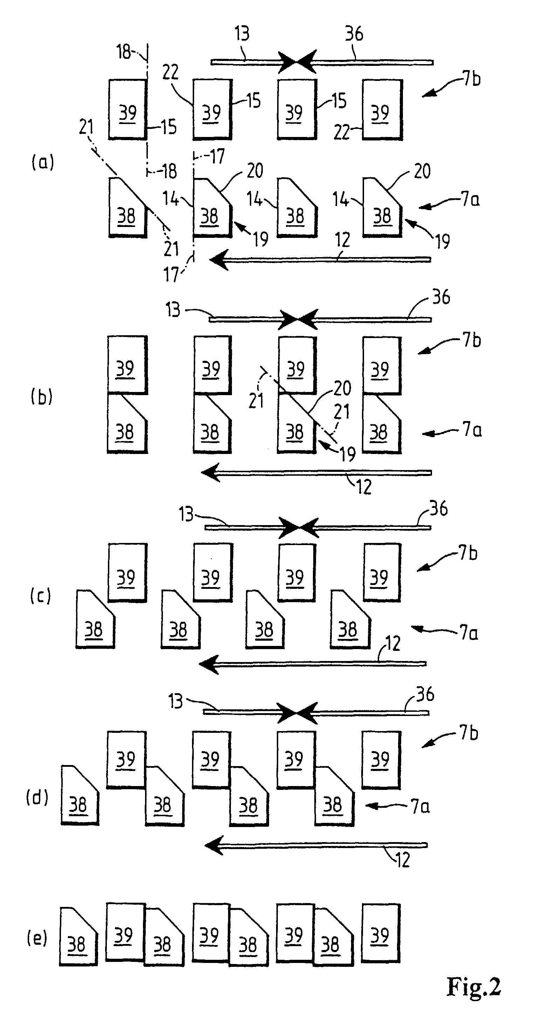

Unter Bezugnahme zunächst auf Figur 1 weist ein nicht näher dargestelltes Kraftfahrzeug eine Antriebsanordnung 27 auf, welche im wesentlichen aus einem Antriebsmotor 4 (Brennkraftmaschine), einer Kupplung 29 und einem synchronisiergliederfreien Zahnräderwechselgetriebe 5 besteht.
Zur Steuerung dieser Antriebsanordnung 27 sind eine elektronische Motorsteuerung 30 zur Ansteuerung von Einspritzmenge, Motorbremse etc., eine elektronische Getriebesteuerung 31 zur Steuerung der Wählstellglieder und der Schaltstellglieder 32 sowie ein Kupplungspedal 33 zur Betätigung der Kupplung 29 verwendet.
Die Kommunikation zwischen der Motorsteuerung 30 und der Getriebesteuerung 31 erfolgt über einen Datenbus (CAN) 34. Die Verbindung zum Fahrer erfolgt durch ein Gebergerät 35, über welches Befehle zum Hoch- oder Herunterschalten an die Getriebesteuerung 31 erteilt werden.
Die Kupplung 29 wird nur zum Anfahren und zum Anhalten des Fahrzeuges betätigt. Alternativ zur Betätigung durch den Fahrer kann auch eine automatische Kupplungsbetätigung verwendet sein.
Der Gangwechsel im Zahnräderwechselgetriebe 5 erfolgt durch Ein- und Ausrücken von synchronisiergliederfreien Zahnradkupplungen 6,7 - die den jeweiligen Gängen (I,II) zugeordnet sind.
Das Einstellen der dem jeweils zu schaltenden neuen Gang (II) zugehörigen Synchrondrehzahl erfolgt durch den Antiebsmotor 4, dessen Stellglieder entsprechende Befehle aus der Motorsteuerung 30 erhalten.
Die Zulässigkeit des vom Fahrer gewünschten Gangwechsels wird in der Getriebesteuerung 31 überprüft.
Zum Schalten des Zahnräderwechselgetriebes 5 aus einem alten Gang I in einen neuen Gang II wird ohne Betätigung der Fahrzeugkupplung 29 ein Eingriff in die Motorsteuerung 30 vorgenommen, der
- zum Herausnehmen des alten Ganges (I) das Motormoment Mₘₒₜ unter Verringerung des Momentes im Schubbetrieb und unter Erhöhung des Momentes im Schubbetrieb derart einregelt, daß die Zahnradkupplung 6 des alten Ganges (I) ausgerückt werden kann, und
- zum Einstellen der Synchrondrehzahl des neuen Ganges (II) die Motordrehzahl nₘₒₜ anhebt oder absenkt, so daß bei einer nur noch geringen Differenzdrehzahl 13 (Fig.2_{(a)bis(d)}) die Zahnradkupplung 7 des neuen Ganges (II) eingerückt werden kann.
Die Synchrondrehzahl wird
- zum Hochschalten (II>I) durch Reduzierung der Kraftstoffeinspritzmenge und ggfls. durch Betätigung der Motorbremse und
- zum Herunterschalten (I→II) durch Erhöhung der Kraftstoffeinspritzmenge
erreicht.
Die Synchrondrehzahl wird gemäß Figur 2 so eingeregelt, daß eine Restdifferenzdrehzahl 13 verbleibt, und zwar derart, daß die Drehzahl 12 der motorseitigen Getriebeelemente - also der mit dem Zahnrad des neuen Ganges (II) verbundenen Kupplungshälfte 7a - höher ist als die Drehzahl 36 der abtriebsseitigen Getriebeelemente - also der drehfest und axial verschiebbar auf der Getriebeabtriebswelle 37 sitzenden und mit einer Schaltschiebemuffe verbundenen Kupplungshälfte 7b.

Zwischen 10 min ⁻¹ und 40 min⁻¹ liegende Differenzdrehzahlen 13 haben sich für den beabsichtigten Zweck als vorteilhaft erwiesen.

Die Differenzdrehzahl 13 der jeweiligen Zahnradkupplung beim Eirücken ist bestimmend für die Einrückzeit und den beim Anschlagen der Zahnflanken entstehenden Stoß. Es erklärt sich folgender Zusammenhang:
Die Einrückzeit hängt davon ab, wie lange es dauert, bis der Differenzwinkel 13 zweier Zähne überstrichen wird und diese sodann aneinanderschlagen können. Je größer die Differenzdrehzahl ist, umso kürzer wird die Einrückzeit.
Beim Anschlagen der Zähne ensteht ein Stoß, durch den die Restdifferenzdrehzahl abgebaut wird. Der Stoß wird umso kleiner, je kleiner die Differenzdrehzahl ist. Untersuchungen haben gezeigt, daß in dem o.a. Bereich liegende Differenzdrehzahlen typisch für kurze Einrückzeiten und niedrige Stöße sind.

In der oben beschriebenen Weise wid erreicht, daß das Einrücken der Zahnradkupplung 7 des neuen Ganges (II) immer so erfolgt, daß ein und dieselben Eingriffsflanken 14 der Kupplungszähne 38 der einen Kupplungshälfte 7a mit ein und denselben Eingriffsflanken 15 der Kupplungszähne 39 der anderen Kupplungshälfte 7b in Kontakt gelangen, und zwar unabhängig davon, ob es sich um eine Hochschaltung oder um eine Herunterschaltung handelt.
Somit können die Kupplungszähne 38 der einen Kupplungshälfte 7a eine gerade Eingriffsflanke 14 ohne Anschrägung und eine Flanke 19 mit einer Anschrägung 20 aufweisen, während die Kupplungszähne 39 der anderen Kupplungshälfte 7b mit einer Eingriffsflanke 15 ohne Anschrägung für den Kontakt mit einer entsprechenden Eingriffsflanke 14 der einen Kupplungshälfte 7a versehen sind.
Dies ermöglicht, daß die Kupplungszähne 38 der einen Kupplungshälfte 7a immer mit ihren geraden Eingriffsflanken 14 ohne Anschrägung an einer jeweiligen geraden Eingriffsflanke 15 ohne Anschrägung eines Kupplungszahnes 39 der anderen Kupplungshälfte 7b anschlagen und dabei lediglich Umfangskräfte erzeugt werden, die die verbliebene Differenzdrehzahl abbauen, und keine Axialkräfte entstehen, die der Schaltkraft entgegenwirken würden.
Die Anschrägung 20 der zweiten Flanke 19 ermöglicht ein axiales Einrücken der Kupplungszähne 38,39 während des Überstreichens des Differenzwinkels zwischen zwei gegenüberstehenden Kupplungszähnen.

In Figur 2₍ₐ₎ ist die gegenseitige Lage der Kupplungszähne 38/39 gezeigt, wenn die Schaltschiebemuffe mit den Kupplungshälften 6b,7b sich in ihrer Neutralstellung befindet, in welcher beide Zahnradkupplungen 6 und 7 ausgerückt sind.
In Figur 2_{(b)} ist eine zufällige Berührstellung der Kupplungszähne 38,39 dargestellt, die sich ergeben kann, wenn die Schaltschiebemuffe mit den Kupplungshälften 6b,7b aus der Neutralstellung der Figur 2₍ₐ₎ in Richtung der mit dem Zahnrad des neuen Ganges (II) verbundenen Kupplungshälfte 7a betätigt wird.
In Figur 2_{(c)} sind die Kupplungszähne 38,39 in einer Zwischenstellung gezeigt, welche sich bei dem axialen Einrücken der Kupplungszähne 39 in die Kupplungsverzahnung 38 der Kupplungshälfte 7a - das durch die Anschrägung 20 der Flanken 19 der Kupplungszähne 38 erleichtert wird - ergeben kann.
Während die geraden Eingriffsflanken 14 und 15 jeweils in einer die Kupplungsachse 16-16 enthaltenden Ebene 17-17 bzw. 18-18 des betreffenden Kupplungszahnes 38 bzw. 39 liegen, sind die Anschrägungen 20 jeweils in einer zur Kupplungsachse 16-16 geneigten Ebene 21-21 des betreffenden Kupplungszahnes 38 vorgesehen.
Bei den Kupplungszähnen 39 der anderen Kupplungshälfte 7b liegt auch die zweite Flanke 22 in einer die Kupplungsachse 16-16 enthaltenden Ebene des jeweiligen Zahnes.
In Figur 2_{(d)} sind die Kupplungszähne 38,39 in derjenigen Stellung gezeigt, in welcher ihre geraden, ohne Anschrägung ausgeführten Eingriffsflanken 14,15 gerade aneinander anschlagen.
Schließlich gibt die Figur 2₍ₑ₎ den vollständig eingerückten Zustand der Zahnradkupplung 7 des neuen Ganges II mit der entsprechenden Stellung der Kupplungszähne 38,39 wieder.

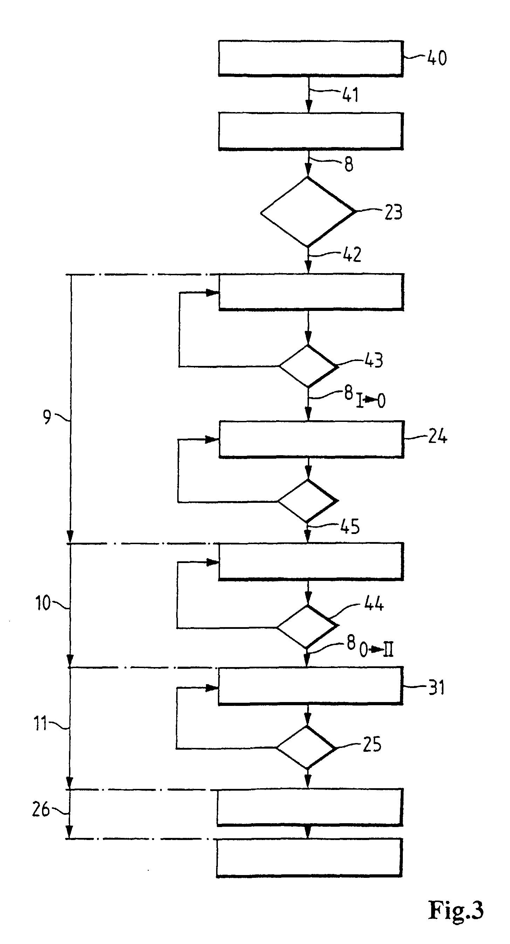

Gemäß dem Signalflußplan der Figur 3 wird eine Startstufe 40 initiiert, wenn der Fahrer über das Gebergerät 35 einen Schaltwunsch 41 für eine Umschaltung aus einem alten Gang I in einen neuen Gang II äußert. Von dem Gebergerät 35 wird der Schaltwunsch 41 zum Getriebesteuergerät 31 übermittelt. Das Getriebesteuergerät 31 erzeugt ein dem neuen Gang II entsprechendes Schaltsignal 8, welches in einem ersten Prüfschritt 23 auf seine Zulässigkeit anhand der Parameter Motormoment Mₘₒₜ - Motordrehzahl nₘₒₜ - Getriebeabtriebsdrehzahl n_{gtr} überprüft wird. Ist der neue Gang II als unzulässig erkannt, wird die Schaltung verweigert. Wird jedoch die Zulässsigkeit des neuen Ganges II festgestellt, wird ein erster Verfahrensschritt 9 ausgelöst, in welchem zunächst über den Datenbus 34 an die Motorsteuerung 30 der Befehl 42 zur Verringerung des Motormomentes Mₘₒₜ im Zugbetrieb oder Erhöhung im Schubbetrieb übermittelt und ein Prüfschritt 43 initiiert wird, in welchem überprüft wird , ob das Motormoment Mₘₒₜ auf Null gebracht ist. Beim Erreichen von Mₘₒₜ=0 erhält das Schaltstellglied 32 des alten Ganges I den Schaltbefehl 8_{I→0} zum Ausrücken des alten Ganges I. Dabei wird ein weiterer Prüfschritt 24 initiiert, in welchem überprüft wird, ob die Zahnradkupplung 6 des alten Ganges I ausgerückt ist. Wenn die Zahnradkupplung 6 ausgerückt ist, wird ein weiterer Verfahrensschritt 10 ausgelöst, in welchem über den Datenbus 34 an die Motorsteuerung 30 der Befehl 45 zur Einstellung der Motordrehzahl nₘₒₜ auf den signifikanten Wert ausgegeben wird, bei welchem die Drehzahl 12 der antriebsseitigen Kupplungshälfte 7a etwa um die Drehzahldifferenz 13 größer ist als die Drehzahl 36 der abtriebsseitigen Kupplungshälfte 7b der Zahnradkupplung 7 des neuen Ganges II. Dieser Verfahrensschritt 10 zur Steuerung der Motordrehzahl nₘₒₜ auf den signifikanten Wert wird durch einen Prüfschritt 44 abgeschlossen, in welchem festgestellt wird, ob der signifikante Wert erreicht ist. Wenn dies der Fall ist, wird ein weiterer Verfahrensschritt 11 ausgelöst, in welchem die Getriebesteuerung 31 über den Datenbus 34 durch einen Schaltbefehl 8_{0→II} veranlaßt wird, das Schaltstellglied 32 zum Einrücken der Zahnradkupplung 7 umzusteuern. Dieser Verfahrensschritt 11 wird wiederum durch einen Prüfschritt 25 abgeschlossen, in welchem die Stellung der Zahnradkupplung 7 überwacht wird. Wenn festgestellt wird, daß die Zahnradkupplung 7 des neuen Ganges II eingerückt ist, wird ein weiterer Verfahrensschritt 26 zum Hochsetzen des Motormomentes Mₘₒₜ ausgelöst, womit der Schaltvorgang I→II abgeschlossen ist.

## Patentansprüche

1. Verfahren zum Schalten eines synchronisiergliederfreien Zahnräderwechselgetriebes (5)aus einem alten Gang (I) in einen neuen Gang (II) ohne Unterbrechung der Antriebsverbindung (Kupplung 29) zwischen einer Antriebswelle des Zahnräderwechselgetriebes (5) und einer als Antriebsmotor verwendeten Brennkraftmaschine (4) und unter Verwendung formschlüssiger Zahnradkupplungen (6,7) zum Ankuppeln eines jeweiligen Zahnrades an seine Getriebewelle, bei dem in einem durch ein Schaltsignal (8) ausgelösten Verfahrensschritt (9) zunächst das Motormoment (M_{Mot}) verringert und sodann die Zahnradkupplung (6) des alten Ganges (I) ausgerückt wird, und bei dem in einem weiteren Verfahrensschritt (11) bei ausgerücktem alten Gang (I) die Motordrehzahl (n_{Mot}) - wenn diese im Bereich der Synchrondrehzahl liegt - über eine vorgegebene Zeitspanne auf einem signifikanten Wert gehalten und in dieser Zeitspanne die Zahnradkupplung (7) des neuen Ganges (II) eingerückt wird,
**dadurch gekennzeichnet,**
daß in dem durch das Schaltsignal (8) ausgelösten Verfahrensschritt (9) das Motormoment (M_{Mot}) im Schubbetrieb zunächst erhöht wird, und daß der signifikante Wert der Motordrehzahl (n_{Mot}) einer vorgegebenen Drehzahldifferenz (13) an den Zahnradkupplungen(6,7) derart zugeordnet ist, daß die jeweils antriebsseitige Kupplungshälfte (6a,7a) bei allen Schaltungen entweder immer die höhere (12) oder immer die niedrigere Drehzahl gegenüber der Drehzahl (36) der abtriebsseitigen Kupplungshälfte (6b,7b) aufweist.

2. Verfahren nach Patentanspruch 1,
**gekennzeichnet** durch die Verwendung von Zahnradkupplungen (6,7), bei denen die jeweils eine Eingriffsflanke (14 oder 15) einer Kupplungshälfte (7a oder 7b), welche bei einer Schaltung mit der jeweils einen Eingriffsflanke (15 oder 14) der anderen Kupplungshälfte (7b oder 7a) in Kontakt gelangt, vollständig in einer die Kupplungsachse (16-16) enthaltenden Ebene (17-17 oder 18-18) ihrer Kupplungshälfte (7a oder 7b) liegt.

3. Verfahren nach Patentanspruch 2,
**gekennzeichnet** durch die Verwendung von Zahnradkupplungen (6,7), bei denen die jeweils andere Eingriffsflanke (19) einer Kupplungshälfte (7a), welche bei einer Schaltung nicht mit der jeweils anderen, in Umfangsrichtung benachbarten Eingriffsflanke (22) der anderen Kupplungshälfte (7b) in Kontakt gelangt, an ihrem der anderen Kupplungshälfte (7b) zugekehrten Ende einen abgeschrägten Endabschnitt (20) aufweist, welcher in einer zur Kupplungsachse (16-16) geneigten Ebene (21-21) ihrer Kupplungshälfte (7a) liegt.

4. Verfahren nach einem der Patentansprüche 1 bis 3,
**dadurch gekennzeichnet,**
daß die vorgegebene Drehzahldifferenz (13) typischerweise wenigstens 10 min⁻¹ und höchstens 40 min⁻¹ beträgt.

5. Verfahren nach einem der Patentansprüche 1 bis 4,
**dadurch gekennzeichnet,**
daß nach dem Auftreten des Schaltsignales (8) und vor dem Einleiten des durch das Schaltsignal (8) ausgelösten Verfahrensschrittes (9) ein Prüfschritt (23) durchgeführt wird, in welchem die Zulässigkeit der Schaltung anhand der Parameter Motormoment (Mₘₒₜ) und Motordrehzahl (nₘₒₜ) sowie Getriebeabtriebsdrehzahl (n_{getr}) überprüft wird.

6. Verfahren nach einem der Patentansprüche 1 bis 5,
**dadurch gekennzeichnet,**
daß der durch das Schaltsignal (8) ausgelöste Verfahrensschritt (9) durch einen Prüfschritt (24) zur Überwachung der Stellung der Zahnradkupplung (6) des alten Ganges (I) dann beendet wird, wenn sich diese Zahnradkupplung (6) in der ausgerückten Stellung befindet.

7. Verfahren nach einem der Patentansprüche 1 bis 6,
**dadurch gekennzeichnet,**
daß der Verfahrensschritt (11) zum Einrücken der Zahnradkupplung (7) des neuen Ganges (II) durch einen Prüfschritt (25) zur Überwachung der Stellung dieser Zahnradkupplung (7) dann beendet wird, wenn sich die Zahnradkupplung (7) in der eingerückten Stellung befindet, und daß mit Beendigung dieses Verfahrensschrittes (11) ein weiterer Verfahrensschritt (26) zur Erhöhung des Motormomentes (Mₘₒₜ) ausgelöst wird.

## Claims

1. A method of shifting a non-synchromesh gear changing mechanism (5) out of an old gear (I) and into a new gear (II) without interrupting the drive connection (clutch 29) between a drive shaft of the gear changing mechanism (5) and an internal combustion engine (4) used as the driving engine and, by using form-locking gearwheel couplings (6, 7) for coupling a respective gearwheel to its gear shaft, in which, in a process stage (9) triggered by a switching signal (8), firstly the engine torque (M_{Mot}) is reduced and then the gearwheel coupling (6) of the old gear (1) is disengaged, and in which, in a further process stage (11) and with the old gear (I) disengaged, the engine speed (n_{Mot}) - if it is within the synchronous speed range - is maintained at a significant level for a given length of time, during which the gearwheel coupling (7) of the new gear (II) is engaged, characterised in that, in the process stage triggered by the switching signal (8), the engine torque (M_{Mot}) is, in pushing mode, first increased and in that the significant level of engine torque (M_{Mot}) is so associated with a given speed difference (13) at the gearwheel couplings (6, 7) that the respective drive-side coupling half (6a, 7a) is, at all shifting operations, either always at the higher (12) or always at the lower speed in comparison with the speed (36) of the output-side coupling half (6b, 7b).

2. A method according to patent claim 1, characterised by the use of gearwheel couplings (6, 7) in which whichever is the engaging flank (14 or 15) of a coupling half (7a or 7b) which, upon gear-changing, comes in contact with whichever is the engaging flank (15 or 14) of the other coupling half (7b or 7a), lies completely in a plane (17-17 or 18-18) of its coupling half (7a or 7b) which contains the coupling axis (16-16).

3. A method according to patent claim 2, characterised by the use of gearwheel couplings (6, 7) in which whichever is the other engaging flank (19) of the coupling half (7a) which, upon gear changing, does not come in contact with whichever is the other engaging flank (22) of the other coupling half (7b) and which is adjacent in the peripheral direction, has on its end which is towards the other coupling half (7b) a chamfered end portion (20) which lies in a plane (21-21) of its coupling half (7a) and which is inclined in relation to the coupling axis (16-16).

4. A method according to one of patent claims 1 to 3, characterised in that the predetermined difference (13) in rotary speeds typically amounts to at least 10 min⁻¹ and not more than 40 min⁻¹.

5. A method according to one of patent claims 1 to 4, characterised in that after the making of the switching signal (8) and prior to initiation of the stage of the process (9) which is triggered by the switching signal (8), a verification stage (23) is performed in which the admissibility of the gear shifting operation is checked on the basis of the parameters engine torque (M_{Mot}) and engine speed (nₘₒₜ) as well as the gearbox output speed (n_{getr}).

6. A method according to one of patent claims 1 to 5, characterised in that stage (9) of the process which is triggered by the switching signal (8) is ended by a verification stage (24) for monitoring the position of the gearwheel coupling (6) of the old gear (I) when this gearwheel coupling (6) is in the disengaged position.

7. A method according to one of patent claims 1 to 6, characterised in that stage (11) of the process for engaging the gearwheel coupling (7) of the new gear (II) is ended by a verification stage (25) for monitoring the position of this gearwheel coupling (7) when the gearwheel coupling (7) is in the engaged position and in that upon completion of this stage (11) of the process, a further stage (26) is triggered to increase the engine torque (M_{Mot}).

## Revendications

1. Procédé pour commuter une boîte de vitesses à pignons (5), ne comportant aucun organe de synchronisation, depuis une ancienne vitesse (I) sur une nouvelle vitesse (II) sans interruption de la liaison motrice (embrayage 29) entre un arbre d'entraînement de la boîte de vitesse à pignons (5) et un moteur à combustion interne (4) utilisé comme moteur d'entraînement, et moyennant l'utilisation d'embrayages à pignons (6, 7) réalisant un engrènement par formes complémentaires pour l'accouplement d'un pignon respectif à son arbre de transmission, selon lequel, lors d'une étape (9) du procédé déclenchée par un signal de commutation (8), tout d'abord le couple moteur (M_{Mot}) est réduit, puis l'embrayage à pignons (6) de l'autre vitesse (I) est désenclenché, et selon lequel lors d'une autre étape (11) du procédé, alors que l'ancienne vitesse (I) est désenclenchée, la vitesse de rotation (n_{Mot}) du moteur - lorsqu'elle se situe au voisinage de la vitesse de rotation de synchronisation - est maintenue pendant un intervalle de temps prédéterminé à une valeur élevée et, pendant cet intervalle de temps, l'embrayage à pignons (7) de la nouvelle vitesse (II) est enclenché, caractérisé en ce que lors de l'étape (9) du procédé déclenchée par le signal de commutation (8), le couple moteur (M_{Mot}) est tout d'abord accru dans le fonctionnement en poussée, et que la valeur élevée de la vitesse de rotation (nₘₒₜ) du moteur est associée à une différence prédéterminée (13) des vitesses de rotation au niveau des embrayages à pignons (6, 7) de telle sorte que la moitié d'embrayage (6a, 7a), qui est située respectivement sur le côté entraînement, possède, pour toutes les commutations, soit toujours la vitesse de rotation (12) plus élevée, soit toujours la vitesse de rotation plus faible que la vitesse de rotation (36) de la moitié d'embrayage (6b, 7b) située sur le côté mené.

2. Procédé selon la revendication 1, caractérisé par l'utilisation d'embrayages à pignons (6, 7), dans lesquels un flanc respectif d'attaque (14 ou 15) d'une moitié d'embrayage (7a ou 7b) lors d'une commutation, vient en contact avec un flanc d'attaque respectif (15 ou 14) de l'autre moitié d'embrayage (7b ou 7a), se situe complètement dans un plan (17-17 ou 18-18), qui contient l'axe (16-16) de l'embrayage, de sa moitié d'embrayage (7a ou 7b).

3. Procédé selon la revendication 2, caractérisé par l'utilisation d'embrayages à pignons (6, 7), dans lesquels l'autre flanc respectif d'attaque (19) d'une moitié d'embrayage (7a), qui dans le cas d'une commutation ne vient pas en contact avec l'autre flanc d'attaque respectif (22), qui est voisin dans la direction circonférentielle, de l'autre moitié d'embrayage (7b), possède sur son extrémité tournée vers l'autre moitié d'embrayage (7b) une partie d'extrémité biseautée (20), qui se situe dans un plan (21-21), incliné par rapport à l'axe d'embrayage (16-16), de sa moitié d'embrayage (7a).

4. Procédé selon l'une des revendications 1 à 3, caractérisé en ce que la différence prédéterminée (13) des vitesses de rotation est égale de façon typique au moins à 10 mn⁻¹ et au maximum à 40 mn⁻¹.

5. Procédé selon l'une des revendications 1 à 4, caractérisé en ce qu'après l'apparition du signal de commutation (8) et avant le déclenchement de l'étape (9) du procédé, qui est déclenchée par le signal de commutation (8), une étape de contrôle (23) est exécutée, lors de laquelle l'autorisation de la commutation est contrôlée sur la base des paramètres que sont le couple moteur (M_{Mot}) et la vitesse de rotation (nₘₒₜ) ainsi que la vitesse de rotation (n_{getr}) du côté mené de la boîte de vitesses.

6. Procédé selon l'une des revendications 1 à 5, caractérisé en ce que l'étape (9) du procédé, qui est déclenchée par le signal de commutation (8), se termine par une étape de contrôle (24) pour le contrôle de la position de l'embrayage à pignons (6) de l'ancienne vitesse (I) lorsque cet embrayage à pignons (6) est situé dans la position désenclenchée.

7. Procédé selon l'une des revendications 1 à 6, caractérisé en ce que l'étape (11) du procédé pour l'enclenchement de l'embrayage à pignons (7) de la nouvelle vitesse (I) est terminée par une étape de contrôle (25) servant à contrôler la position de cet embrayage à pignons (7) lorsque l'embrayage à pignon (7) est situé dans la position enclenchée, et que lors de la fin de cette étape (11) du procédé, une autre étape (26) du procédé est déclenchée pour accroître le couple moteur (Mₘₒₜ).
